(19) Europäisches Patentamt
European Patent Office
Office européen des brevets

(11) **EP 4 311 357 A1**

(12) **EUROPEAN PATENT APPLICATION**
published in accordance with Art. 153(4) EPC

(43) Date of publication:
**24.01.2024 Bulletin 2024/04**

(21) Application number: **22783954.5**

(22) Date of filing: **31.03.2022**

(51) International Patent Classification (IPC):
***H04W 72/12*** *(2023.01)*

(52) Cooperative Patent Classification (CPC):
**H04L 1/18; H04L 5/00; H04W 4/06; H04W 72/12**

(86) International application number:
**PCT/CN2022/084587**

(87) International publication number:
**WO 2022/213887 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.04.2021 CN 202110364242**

(71) Applicant: **Huawei Technologies Co., Ltd.
Longgang
Shenzhen, Guangdong 518129 (CN)**

(72) Inventors:
• **SU, Tong
Shenzhen, Guangdong 518129 (CN)**
• **LI, Bingzhao
Shenzhen, Guangdong 518129 (CN)**
• **XIA, Jinhuan
Shenzhen, Guangdong 518129 (CN)**
• **GUAN, Lei
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **DATA TRANSMISSION METHOD AND APPARATUS**

(57) This application provides a data transmission method and an apparatus, to resolve a problem of high multicast transmission control signaling overheads. The method includes: receiving first multicast data using a multicast based semi-persistent scheduling SPS transmission; receiving first downlink control information DCI, where the first DCI is scrambled by a configured scheduling radio network temporary identifier CS-RNTI; and receiving first data based on the first DCI, where the first data is retransmitted data of the first multicast data.

FIG. 7

**Description**

**CROSS-REFERENCE TO RELATED APPLICATIONS**

This application claims priority to Chinese Patent Application No. 202110364242.9, filed with the China National Intellectual Property Administration on April 4, 2021 and entitled "DATA TRANSMISSION METHOD AND APPARATUS", which is incorporated herein by reference in its entirety.

**TECHNICAL FIELD**

Embodiments of this application relate to the field of communication technologies, and in particular, to a data transmission method and an apparatus.

**BACKGROUND**

In a 4th generation (4th generation, 4G) network or a 5th generation (5th generation, 4G) network, a base station may send data to a terminal in multicast mode or unicast mode. Compared with the unicast mode, the multicast mode can save downlink resources.

Currently, dynamic scheduling is usually used for a transmission in multicast mode. For example, before a physical downlink shared channel (physical downlink shared channel, PDSCH) is sent each time, a downlink control channel (physical downlink control channel, PDCCH) needs to be sent for scheduling the PDSCH, where the PDSCH carries downlink data. In this mode, control signaling overheads are high, and consequently data transmission efficiency is low.

**SUMMARY**

Embodiments of this application provide a data transmission method and an apparatus, to reduce signaling overheads and improve data transmission efficiency.

According to a first aspect, an embodiment of this application provides a data transmission method, including: receiving first multicast data using a multicast based semi-persistent scheduling SPS transmission; receiving first downlink control information DCI, where the first DCI is scrambled by a configured scheduling radio network temporary identifier CS-RNTI; and receiving first data based on the first DCI, where the first data is retransmitted data of the first multicast data.

In this embodiment of this application, multicast data is transmitted through semi-persistent scheduling, without a need to send scheduling information, namely, DCI, before the multicast data is sent each time, so that control signaling overheads can be reduced. In addition, when data needs to be retransmitted to an individual terminal device, the multicast data is retransmitted to the terminal device in unicast mode instead of scheduling a data retransmission in multicast mode. In this way, downlink resource occupation can be further reduced and data transmission efficiency can be improved.

In an optional implementation, the method further includes: receiving second DCI scrambled by a group-configured scheduling-radio network temporary identifier G-CS-RNTI, where the second DCI is used to activate the multicast based semi-persistent scheduling SPS transmission.

In an optional implementation, the method further includes: receiving third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission. A manner of indicating semi-persistent scheduling or dynamic scheduling is defined in DCI, so that a G-RNTI can be used to dynamically schedule multicast data or semi-persistently schedule the multicast data. This expands an application scenario of the G-RNTI, saves blind detection resources on a terminal device side, and reduces control signaling overheads during scheduling of multicast downlink data.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0. An NDI in DCI can be used to distinguish whether scheduled data is initially transmitted data or retransmitted data.

In an optional implementation, the method further includes: receiving fourth DCI scrambled by a group-radio network temporary identifier G-RNTI, where the fourth DCI is used to deactivate the multicast based semi-persistent scheduling SPS transmission; or receiving fourth DCI scrambled by a group-configured scheduling-radio network temporary identifier G-CS-RNTI, where the fourth DCI is used to deactivate the multicast based semi-persistent scheduling SPS transmission. It may be understood that the G-RNTI corresponding to the fourth DCI may be the same as or different from the G-RNTI corresponding to the third DCI. Similarly, the G-CS-RNTI corresponding to the fourth DCI may be the same as or different from the G-CS-RNTI corresponding to the second DCI.

According to a second aspect, an embodiment of this application provides a data transmission method, which may be applied to a network device and includes:

sending first multicast data using a multicast based semi-persistent scheduling SPS transmission, where it may be understood that the first multicast data is usually sent to a plurality of terminal devices; and sending first downlink control information DCI to a single terminal device in the plurality of terminal devices, where the first DCI is scrambled by a configured scheduling radio network temporary identifier CS-RNTI, the first DCI is used to schedule first data, and the first data is retransmitted data of the first multicast data. The single terminal device is one terminal device in one or more terminal devices that do not successfully receive the first multicast data, or the single terminal device is one terminal device in one or more terminal devices whose network side device does not receive a positive feedback for the first multicast data, or the single terminal device is one terminal device in one or more terminal devices whose network side device receives a negative feedback for the first multicast data.

In this embodiment of this application, multicast data is transmitted through semi-persistent scheduling, without a need to send scheduling information, namely, DCI, before the multicast data is sent each time, so that control signaling overheads can be reduced. In addition, when data needs to be retransmitted to an individual terminal device, the multicast data is retransmitted to the terminal device in unicast mode instead of scheduling a data retransmission in multicast mode. In this way, downlink resource occupation can be further reduced and data transmission efficiency can be improved.

In an optional implementation, the method further includes: sending second DCI scrambled by a group-configured scheduling-radio network temporary identifier G-CS-RNTI, where the second DCI is used to activate the multicast based semi-persistent scheduling SPS transmission.

In an optional implementation, the method further includes: sending third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission. A manner of indicating semi-persistent scheduling or dynamic scheduling is defined in DCI, so that a G-RNTI can be used to dynamically schedule multicast data or semi-persistently schedule the multicast data. This expands an application scenario of the G-RNTI, saves blind detection resources on a terminal device side, and reduces control signaling overheads during scheduling of multicast downlink data.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0. An NDI in DCI can be used to distinguish whether scheduled data is initially transmitted data or retransmitted data.

In an optional implementation, the method further includes: sending fourth DCI scrambled by a group-radio network temporary identifier G-RNTI, where the fourth DCI is used to deactivate the multicast based semi-persistent scheduling SPS transmission; or sending fourth DCI scrambled by a group-configured scheduling-radio network temporary identifier G-CS-RNTI, where the fourth DCI is used to deactivate the multicast based semi-persistent scheduling SPS transmission.

According to a third aspect, an embodiment of this application provides a data transmission apparatus, including: a communication unit, configured to receive first multicast data using a multicast based semi-persistent scheduling SPS transmission, where the communication unit is further configured to receive first downlink control information DCI, where the first DCI is scrambled by a configured scheduling radio network temporary identifier CS-RNTI; and a processing unit, configured to receive, through the communication unit, first data based on the first DCI, where the first data is retransmitted data of the first multicast data. Optionally, before the communication unit receives the first DCI, the processing unit is further configured to: determine that the receiving of the first multicast data fails, and send feedback information such as a NACK, where the feedback information indicates that the receiving of the first multicast data fails.

In an optional implementation, the communication unit is further configured to receive second DCI scrambled by a group-configured scheduling-radio network temporary identifier G-CS-RNTI, where the second DCI is used to activate the multicast based semi-persistent scheduling SPS transmission.

In an optional implementation, the communication unit is further configured to receive third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0.

In an optional implementation, the communication module is further configured to: receive fourth DCI scrambled by a group-radio network temporary identifier G-RNTI, where the fourth DCI is used to deactivate the multicast based semi-persistent scheduling SPS transmission; or receive fourth DCI scrambled by a group-configured scheduling-radio network temporary identifier G-CS-RNTI, where the fourth DCI is used to deactivate the multicast based semi-persistent scheduling SPS transmission.

According to a fourth aspect, an embodiment of this application provides a data transmission apparatus, including: a processing unit, configured to generate first multicast data using a multicast based semi-persistent scheduling SPS transmission; and a communication unit, configured to send the first multicast data, where the communication unit is further configured to send first downlink control information DCI, where the first DCI is scrambled by a configured scheduling radio network temporary identifier CS-RNTI, the first DCI is used to schedule first data, and the first data is retransmitted data of the first multicast data.

In this embodiment of this application, semi-persistent scheduling is used during a multicast transmission, without a need to send scheduling information, namely, DCI, before the multicast data is sent each time, so that control signaling overheads can be reduced. In addition, when data needs to be retransmitted to an individual terminal device, the multicast data is retransmitted to the terminal device in unicast mode instead of scheduling a data retransmission in multicast mode. In this way, downlink resource occupation can be further reduced and data transmission efficiency can be improved.

In an optional implementation, the communication unit is further configured to send second DCI scrambled by a group-configured scheduling-radio network temporary identifier G-CS-RNTI, where the second DCI is used to activate the multicast based semi-persistent scheduling SPS transmission.

In an optional implementation, the communication unit is further configured to send third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0.

In an optional implementation, the communication unit is further configured to: send fourth DCI scrambled by a group-radio network temporary identifier G-RNTI, where the fourth DCI is used to deactivate the multicast based semi-persistent scheduling SPS transmission; or send fourth DCI scrambled by a group-configured scheduling-radio network temporary identifier G-CS-RNTI, where the fourth DCI is used to deactivate the multicast based semi-persistent scheduling SPS transmission.

According to a fifth aspect, an embodiment of this application provides a communication apparatus, including a processor. The processor is coupled to a memory. The memory is configured to store a computer program or instructions. The processor is configured to execute the computer program or the instructions, to implement method according to the implementations in the first aspect or the second aspect. The memory may be located inside or outside the apparatus. There are one or more processors.

According to a sixth aspect, an embodiment of this application provides a communication apparatus, including: a logic circuit and an input/output interface. The input/output interface is configured to input first multicast data using a multicast based semi-persistent scheduling SPS transmission. The input/output interface is further configured to input first downlink control information DCI, where the first DCI is scrambled by a configured scheduling radio network temporary identifier CS-RNTI. The logic circuit is configured to obtain, through the input/output interface, first data based on the first DCI, where the first data is retransmitted data of the first multicast data. Optionally, before the first DCI is inputted through the input/output interface, the logic circuit is further configured to: determine that the receiving of the first multicast data fails, and output feedback information such as a NACK, where the feedback information indicates that the receiving of the first multicast data fails.

According to a seventh aspect, an embodiment of this application provides a communication apparatus, including: a logic circuit and an input/output interface. The logic circuit is configured to generate first multicast data using a multicast based semi-persistent scheduling SPS transmission. The input/output interface is configured to output the first multicast data. The input/output interface is further configured to output first downlink control information DCI, where the first DCI is scrambled by a configured scheduling radio network temporary identifier CS-RNTI, the first DCI is used to schedule first data, and the first data is retransmitted data of the first multicast data.

According to an eighth aspect, this application provides a communication apparatus, including a processor and an interface circuit. The interface circuit is configured to communicate with another apparatus. The processor is used in the method according to the implementations in the first aspect or the second aspect.

According to a ninth aspect, this application provides a communication system, including a terminal device configured to perform the method according to the implementations in the first aspect and a network device configured to perform the method according to the implementations in the second aspect.

According to a tenth aspect, this application further provides a chip system, including a processor, configured to perform the method according to the implementations in the first aspect or the second aspect.

According to an eleventh aspect, this application further provides a computing program product, including computer-executable instructions. When the computer-executable instructions are run on a computer, the method according to the implementations in the first aspect or the second aspect is implemented.

According to a twelfth aspect, this application further provides a computer-readable storage medium. The computer-readable storage medium stores a computer program or instructions. When the instructions are run on a computer, the method according to the implementations in the first aspect or the second aspect is implemented.

For technical effects that can be achieved in the fifth aspect to the tenth aspect, refer to descriptions of technical effects that can be brought by the corresponding technical solutions in the first aspect and the second aspect. Details are not described herein again.

## BRIEF DESCRIPTION OF DRAWINGS

FIG. 1 is a schematic diagram of an architecture of a communication system according to an embodiment of this application;

FIG. 2 is a schematic diagram of scheduling of data using a multicast based SPS transmission according to an embodiment of this application;

FIG. 3 is a schematic diagram of a unicast retransmission scheduling mechanism according to an embodiment of this application;

FIG. 4 is a schematic diagram of deactivating a multicast based SPS transmission according to an embodiment of this application;

FIG. 5 is another schematic diagram of scheduling of data using a multicast based SPS transmission according to an embodiment of this application;

FIG. 6 is another schematic diagram of deactivating a multicast based SPS transmission according to an embodiment of this application;

FIG. 7 is a schematic flowchart of a data transmission method according to an embodiment of this application;

FIG. 8 is a schematic diagram of a structure of a data transmission apparatus according to an embodiment of this application;

FIG. 9 is a schematic diagram of a structure of a communication apparatus according to an embodiment of this application; and

FIG. 10 is a schematic diagram of a structure of another communication apparatus according to an embodiment of this application.

## DESCRIPTION OF EMBODIMENTS

A data transmission method and an apparatus provided in embodiments of this application may be used in various communication systems, especially a harmonized communication and sensing (harmonized communication and sensing, HCS) system. The communication system includes but is not limited to: a long term evolution (long term evolution, LTE) system, a 5G system, a new radio (new radio, NR) system, a wireless fidelity (wireless fidelity, Wi-Fi) system, another wireless communication system related to the 3rd generation partnership project (3rd generation partnership project, 3GPP), a wireless communication system that may appear in the future, or the like.

In the following, some terms in embodiments of this application are described, to help a person skilled in the art have a better understanding.

(1) Network device

The network device may communicate with a terminal device, to provide a wireless access service for the terminal device. The network device may also be referred to as a base station device or a base station. The base station may be in a plurality of forms, for example, a macro base station, a micro base station, a relay station, and an access point. For example, the network device provided below in embodiments of this application may be a base station in NR, and the base station in 5G NR may also be referred to as a transmission reception point (transmission reception point, TRP) or a next generation NodeB (next generation NodeB, gNB). The network device provided below in embodiments of this application may alternatively be a NodeB (NodeB, NB) in a wideband code division multiple access (wideband code division multiple access, WCDMA) system. The network device provided below in embodiments of this application may alternatively be an evolved NodeB (evolved NodeB, eNB or eNodeB) in a long term evolution (long term evolution, LTE) system.

In embodiments of this application, a communication apparatus configured to implement a function of the network device may be a network device, or may be a network device that has some functions of a base station, or may be an apparatus that can support the network device in implementing the function, for example, a chip system. The apparatus may be installed in the network device.

(2) Terminal device

The terminal device may also be referred to as a user equipment (user equipment, UE), an access terminal, a terminal unit, a terminal station, a mobile station, a remote station, a remote terminal, a mobile device, a user terminal, a terminal, a wireless communication device, a terminal agent, a terminal apparatus, or the like. For example, the terminal device includes a handheld device, a vehicle-mounted device, a wearable device, or a computing device that has a wireless communication function, a terminal device in a 5G network, a terminal device in a future evolved PLMN network, or the like. For example, the terminal device may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, or a wireless terminal in a smart city (smart city), such as a smart refueler, a terminal device in a highspeed train, or a wireless terminal in a smart home (smart home), such as a smart stereo, a smart coffee machine, or a smart printer.

In embodiments of this application, a communication apparatus configured to implement a function of the terminal device may be a terminal device, or may be a terminal device that has some functions of a terminal, or may be an apparatus that can support the terminal device in implementing the function, for example, a chip system. The apparatus may be installed in the terminal device.

(3) Downlink control channel and downlink data channel

In a downlink transmission process, a signal sent by the network device to the terminal device is also referred to as a downlink signal, and the downlink signal includes a downlink control signal and a downlink data signal. The downlink control channel in embodiments of this application is used to represent a downlink control signal. In other words, the downlink control channel may also be understood as a downlink control signal, and the downlink control channel may be a physical downlink control channel (physical downlink control channel, PDCCH). The downlink data channel in embodiments of this application is used to represent a downlink data signal. In other words, the downlink data channel may also be understood as a downlink data signal, and the downlink data channel may be a physical downlink shared channel (physical downlink shared channel, PDSCH).

The downlink control channel may be configured to schedule the downlink data channel. For example, the PDCCH is configured to transfer PDSCH-related scheduling and configuration information, the PDSCH carries downlink data, the PDCCH carries downlink control information (downlink control information, DCI), the DCI indicates configuration information (such as a time/frequency location and modulation information) of the PDSCH, and the DCI may also indicate indication information of a time domain resource occupied by feedback information corresponding to the PDSCH scheduled by using the DCI. Based on a hybrid automatic repeat request (hybrid automatic repeat request, HARQ) mechanism, the feedback information includes acknowledgment (acknowledgment, ACK) information or negative acknowledgment (negative acknowledgment, NACK) information, and indicates whether the terminal device successfully receives the downlink data. The ACK may also be referred to as a HARQ-ACK, and the NACK may also be referred to as a HARQ-NACK. Specifically, after receiving the downlink data, the terminal device feeds back ACK information on an uplink control channel (physical uplink control channel, PUCCH) if the receiving is correct, or feeds back NACK information on a PUCCH if the receiving is incorrect.

In addition, the DCI is classified into fallback DCI and non-fallback DCI DCI. The fallback DCI is DCI in formats 0_0 and 1_0, and the non fallback DCI is DCI in formats 0_1/0_2 and 1_1/1_2. The DCI in the format 0_0/0_1/0_2 is used for an uplink transmission, and the DCI in the format 1_0/1_1/1_2 is used for a downlink transmission.

(4) Unicast and multicast

A unicast transmission mode is a one-to-one data transmission mode. In embodiments of this application, unicast means that a network device sends a downlink signal, for example, unicast data, to a single terminal device.

A multicast transmission mode is a one-to-many data transmission mode. In embodiments of this application, multicast means that a network device sends a same downlink signal, for example, multicast data, to a group of terminal devices, and the group of terminal devices can all obtain the multicast data. A group of terminal devices include a plurality of terminal devices. Optionally, a group of terminal devices may be located in a same cell. It may be understood that, in multicast transmission mode, a group of terminal devices may share a resource, and a downlink signal sent by the network device on the resource may be received by the group of terminal devices. In comparison with the unicast transmission mode, a downlink signal transmission resource can be saved.

It may be understood that multicast in embodiments of this application may include multicast, or may include broadcast. This is not limited.

(5) Dynamic scheduling

The dynamic scheduling means that each time before sending a PDSCH, a network device needs to send a PDCCH used to schedule the PDSCH this time. The PDSCH based on the dynamic scheduling may also be referred to as a normally scheduled PDSCH. It may be understood that the normally scheduled PDSCH is a PDSCH having scheduling information. The dynamic scheduling may be used in a multicast or unicast transmission scenario.

Optionally, for unicast dynamic scheduling, the network device allocates one cell-radio network temporary identifier (cell-radio network temporary identifier, C-RNTI) to one terminal device. Before sending a PDSCH to a plurality of terminal devices in unicast mode each time, the network device sends DCI scrambled by a C-RNTI of each terminal device. Each terminal device may blindly detect a PDCCH based on the C-RNTI of each terminal device, and receive downlink data. In addition, it should be noted that the C-RNTI identifies unicast dynamic scheduling, and may be configured by the network device for a single terminal device. Certainly, the C-RNTI may alternatively be another identifier, provided that the another identifier can identify the unicast dynamic scheduling. This is not limited in embodiments of this application.

Optionally, for multicast dynamic scheduling, the network device allocates a same group-radio network temporary identifier (group-radio network temporary identifier, G-RNTI) to a plurality of terminal devices. Before sending a PDSCH to a plurality of terminal devices in multicast mode each time, the network device sends DCI scrambled by the G-RNTI. Each terminal device may blindly detect a PDCCH based on the G-RNTI, and receive the same PDSCH, where the receiving may also be understood as receiving downlink data carried on the PDSCH. In addition, it should be noted that the G-RNTI identifies multicast/broadcast scheduling, and may be configured by the network device for a group of terminal devices. Certainly, the G-RNTI may be another identifier, for example, an M-RNTI, provided that the another identifier can identify the multicast/broadcast scheduling. This is not limited in embodiments of this application.

(6) Semi-persistent scheduling (semi-persistent scheduling, SPS)

The semi-persistent scheduling SPS means that a terminal device may periodically receive a PDSCH based on a semi-persistent scheduling configuration indicated by a network device. The semi-persistent scheduling may also be referred to as semi-static scheduling. Before sending a PDSCH to the terminal device for the first time, the network device first sends an activation PDCCH (or referred to as activation DCI) to the terminal device. The activation PDCCH is used to activate a corresponding SPS configuration. The activation PDCCH further indicates a downlink time domain resource occupied by downlink data scheduled by the activation PDCCH. Specifically, the occupied downlink time domain resource may include a downlink slot in which the scheduled downlink data is located, and a start symbol S on which the downlink data is located in the downlink slot and a length L. Subsequently, the terminal device may receive, based on the activated SPS configuration, the PDSCH sent by the network device. It may be understood that for a semi-persistent scheduling manner, the PDSCH sent by the network device for the first time is scheduled by the activation PDCCH, and a PDSCH subsequently sent by the network device does not need to be scheduled by another PDCCH, and is all based on the activation PDCCH. Alternatively, it may be understood that a PDSCH sent by the network device for the first time may be referred to as a PDSCH having scheduling information, and a PDSCH subsequently sent by the network device is a PDSCH having no scheduling information.

The network device may configure one or more SPS configurations for the terminal device, for example, configure a maximum of eight SPS configurations. A parameter in each SPS configuration may be the same or may be different. The parameter included in each SPS configuration may include at least one of the following: an index (index, ID) corresponding to the SPS configuration; an SPS transmission periodicity; configuration information of a physical uplink control channel (physical uplink control channel, PUCCH) resource; a modulation and coding scheme table (MCS-table), where an MCS refers to a modulation and coding scheme; or information used to determine a hybrid automatic repeat request (hybrid automatic repeat request, HARQ) process (process).

The configuration information of the PUCCH resource is used to configure a symbol occupied in a slot by the PUCCH resource carrying feedback information. The configuration information of the PUCCH resource includes a PUCCH format 0 or a PUCCH format 1, indicating that a length of the feedback information that can be accommodated by the PUCCH resource is 1 bit or 2 bits. It should be noted that if the network device configures one SPS configuration for the terminal device, the terminal device may perform feedback based on a PUCCH resource indicated in the SPS configuration. If the network device configures a plurality of SPS configurations for the terminal device, the terminal device needs to determine, from a PUCCH resource set for the SPS, the PUCCH resource used to carry the feedback information. The foregoing PUCCH resource set for the SPS is configured in PUCCH-config configured by a higher layer.

The modulation and coding scheme table indicates a modulation and coding scheme used by a scheduled PDSCH, and may be specifically represented by using an MCS index.

The foregoing information used to determine a HARQ process includes a quantity of HARQ processes available for the SPS and a configured offset, and a specific HARQ process ID may be determined in the following manner:

$$\text{HARQ Process ID} = [\text{floor} (\text{CURRENT\_slot} \times 10/(\text{numberOfSlotsPerFrame} \times \text{periodicity}))] \text{ modulo nrofHARQ-Processes} + \text{harq-ProcID-Offset},$$

where

$$\text{CURRENT\_slot} = [(\text{SFN} \times \text{numberOfSlotsPerFrame}) + \text{slot number in the frame}]$$

SFN represents a system frame number (system frame number), numberOfSlotsPerFrame is a quantity of slots in each subframe, slot number in the frame represents an index of a current slot, periodicity is the transmission periodicity, nrofHARQ-Processes is the quantity of HARQ processes available for the SPS, and harq-ProcID-Offset is the configured offset.

It may be understood that the HARQ process ID herein identifies a HARQ process used by the terminal device to receive, after the SPS configuration is activated, a PDSCH that is based on an SPS transmission.

Based on the semi-persistent scheduling, the network device does not need to send, each time before sending downlink data, a PDCCH used for scheduling. Control signaling overheads can be reduced in comparison with a dynamic scheduling manner. In a related technical solution, the semi-persistent scheduling is used in a unicast scenario. For example, before sending downlink data to a single terminal device for the first time, a network device sends a piece of activation DCI. The terminal device blindly detects the activation DCI on a PDCCH, and receives, based on a downlink time domain resource indicated by the activation DCI, the downlink data sent by the network device for the first time. The network device subsequently sends downlink data, and no longer sends DCI for scheduling, and the terminal device receives the downlink data based on the activated SPS configuration. However, there is no design for using the semi-persistent scheduling in a multicast scenario. Considering that the multicast mode can save a downlink resource, and the multicast dynamic scheduling increases control signaling overheads, embodiments of this application provide an implementation solution of multicast semi-persistent scheduling. The solution is described in detail in subsequent content.

(7) Scrambling

The scrambling (scrambled) in embodiments of this application means that a CRC check bit corresponding to DCI carried on a PDCCH is scrambled by using a specific RNTI. For ease of description, after being scrambled by a specific RNTI, one piece of DCI is briefly referred to as DCI scrambled by the RNTI. Because the DCI is carried on a PDCCH, the DCI may also be referred to as the PDCCH scrambled by the RNTI, for example, DCI scrambled by a C-RNTI or DCI scrambled by a G-RNTI.

(8) Blind detection

The blind detection in embodiments of this application means that a terminal device performs blind detection on a PDCCH by using a specific RNTI, to attempt to receive possible DCI. For ease of description, it may also be referred to as that a terminal device performs blind detection on DCI by using a specific RNTI, that a terminal device performs blind detection, on a PDCCH, on DCI by using a specific RNTI, or the like. For example, a terminal device performs blind detection on a PDCCH (DCI) by using a C-RNTI.

(9) "A plurality of" in embodiments of this application refers to two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are merely used to distinguish the objects from each other.

(10) Terms "including", "having", and any variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another step or unit that is inherent for the process, the method, the product, or the device. It should be noted that, in embodiments of this application, the word "example", "for example", or the like is used to represent giving an example, an illustration, or a description. Any embodiment or design scheme described as an "example" or "for example" in embodiments of this application should not be explained as having more advantages than another embodiment or design scheme. Exactly, use of the word "example", "for example", or the like is intended to present a related concept in a specific manner.

Considering that control signaling overheads are large in the multicast dynamic scheduling, embodiments of this application provide a data transmission method. A multicast semi-persistent scheduling solution is implemented, so that not only a downlink resource is saved, but also the control signaling overheads can be reduced and data transmission efficiency can be improved.

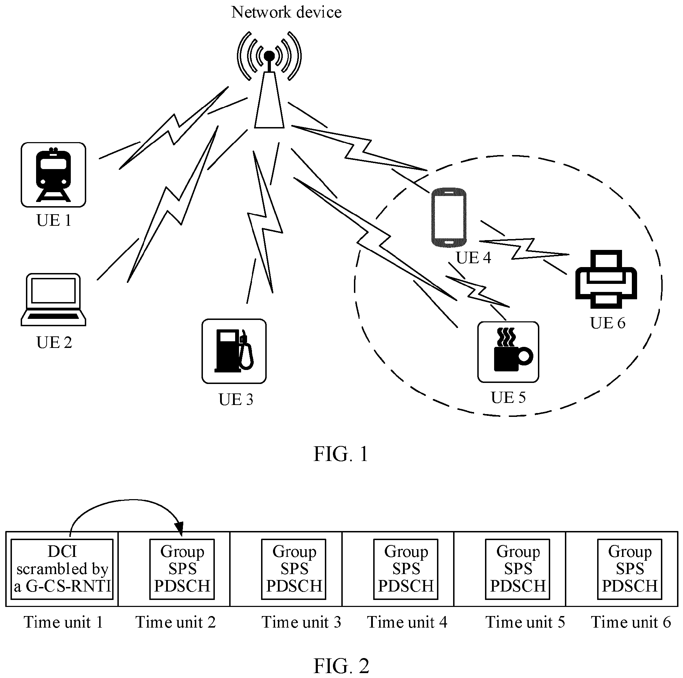

Refer to the communication system shown in FIG. 1. The data transmission method provided in embodiments of this application may be applied to the communication system. The communication system includes at least one terminal device and at least one network device. For example, FIG. 1 shows one network device and six terminal devices, such as a UE 1, a UE 2, a UE 3, a UE 4, a UE 5, and a UE 6.

The network device may indicate, in multicast mode, a plurality of terminal devices to activate a semi-persistent scheduling configuration. Alternatively, it may be understood as that the network device indicates a plurality of terminal devices to activate a multicast based semi-persistent scheduling SPS transmission, and sends, in multicast mode to the plurality of terminal devices, downlink data using the multicast based semi-persistent scheduling transmission. The downlink data may be briefly referred to as a group SPS PDSCH. Each terminal device may receive the foregoing group SPS PDSCH using the multicast based semi-persistent scheduling transmission, and send feedback information corresponding to the group SPS PDSCH to the network device. The network device may receive the feedback information that corresponds to the group SPS PDSCH and that is sent by each terminal device, where the feedback information may be an ACK or a NACK. The network device determines, based on the feedback information sent by each terminal device, whether the foregoing group SPS PDSCH needs to be retransmitted. In addition, the network device may further indicate, in multicast mode, the plurality of terminal devices to deactivate the semi-persistent scheduling configuration. Alternatively, it may be understood as that the network device indicates the plurality of terminal devices to deactivate the multicast based semi-persistent scheduling SPS transmission.

The data transmission method provided in embodiments of this application may be applied to the following communication services: enhanced mobile broadband (enhanced mobile broadband, eMBB), massive machine-type communications (massive machine-type communications, mMTC), and ultra-reliable and low latency communication (ultra-reliable and low latency communication, URLLC). For example, the method may be applied to a scenario such as self driving or telemedicine of the URLLC service, to reduce instruction overheads as much as possible while meeting requirements for high reliability and a low latency.

The data transmission method provided in embodiments of this application may include at least one of the following procedures: activating a multicast based semi-persistent scheduling transmission, deactivating a multicast based semi-persistent scheduling transmission, and retransmitting data related to a multicast based semi-persistent scheduling transmission. For example, the data transmission method includes activating a multicast based semi-persistent scheduling transmission and deactivating a multicast based semi-persistent scheduling transmission. For another example, the data transmission method includes activating a multicast based semi-persistent scheduling transmission and retransmitting data related to a multicast based semi-persistent scheduling transmission. For another example, the data transmission method includes activating a multicast based semi-persistent scheduling transmission, retransmitting data related to a multicast based semi-persistent scheduling transmission, and deactivating a multicast based semi-persistent scheduling transmission. The following further describes the foregoing procedures in detail with reference to a solution 1 and a solution 2. It should be noted that the solution 1 and the solution 2 may be implemented in combination with each other, or may be implemented independently of each other.

In the following method, steps of the network device may be implemented by different function entities included in the network device. In other words, the function entities that perform the steps of the network device may be located in different physical entities. For example, a sending or receiving action of the network device may be located in a radio frequency (radio frequency, RF) unit, a radio remote unit (radio remote unit, RRU), or an active antenna processing unit (active antenna unit, AAU) of the network device. An action processed by the network device may be located in a central unit CU of the network device, or the like. This is not limited in this application.

Solution 1:

A1: Activating a multicast based semi-persistent scheduling transmission

A network device may configure a same group-configured scheduling-radio network temporary identifier (group-configured scheduling-radio network temporary identifier, G-CS-RNTI) for a plurality of terminal devices. Before sending same downlink data (namely, the foregoing group SPS PDSCH) to the plurality of terminal devices for the first time, the network device sends one piece of DCI scrambled by the G-CS-RNTI. The terminal devices blindly detect, on a PDCCH, the DCI scrambled by the G-CS-RNTI, activate, based on the DCI scrambled by the G-CS-RNTI, a multicast based semi-persistent scheduling SPS transmission, and receive the group SPS PDSCH sent by the network device for the first time. It should be noted that the G-CS-RNTI identifies multicast semi-persistent scheduling, or may identify scheduling of a multicast based semi-persistent scheduling retransmission, and may be configured by the network device for a group of terminal devices. Certainly, the G-CS-RNTI may alternatively be replaced with another identifier, provided that the another identifier may identify multicast semi-persistent scheduling or scheduling of a multicast based semi-persistent scheduling retransmission. This is not limited in embodiments of this application.

Optionally, the DCI that is used to activate the multicast based semi-persistent scheduling SPS transmission and that is scrambled by the G-CS-RNTI may be briefly referred to as activation DCI. The following describes in detail content included in the DCI that is sent by the network device and that is scrambled by the G-CS-RNTI.

Optionally, the DCI that is sent by the network device and that is scrambled by the G-CS-RNTI includes information identifying that the DCI is the activation DCI. For example, the DCI includes a Redundancy Version field, and the Redundancy Version field is all 0 to identify that the DCI is the activation DCI. In this case, the terminal devices receive one piece of DCI based on the G-CS-RNTI. If the received DCI includes the information identifying that the DCI is the foregoing activation DCI, the terminal devices learn that the received DCI is the activation DCI, and is used to activate the multicast based semi-persistent scheduling SPS transmission.

Optionally, the DCI that is sent by the network device and that is scrambled by the G-CS-RNTI may indicate at least one of the following time parameters: a slot in which the group SPS PDSCH is located; a start symbol S on which the group SPS PDSCH is located in the slot and a length L; and a slot in which feedback information corresponding to the group SPS PDSCH is located. For example, the DCI may include a bit field that indicates a resource occupied in time domain by data scheduled by the DCI: a time domain resource assignment (Time domain resource assignment) field. A value range of a quantity of bits occupied by the time domain resource assignment field is [0, 4]. Optionally, the DCI that is sent by the network device and that is scrambled by the G-CS-RNTI may further include a bit field that indicates a resource occupied in frequency domain by the data scheduled by the DCI: a frequency domain resource assignment (Frequency domain resource assignment) field. Optionally, the DCI that is sent by the network device and that is scrambled by the G-CS-RNTI may further include a bit field that indicates a modulation and coding scheme of the data scheduled by the DCI: a modulation and coding scheme (Modulation and coding scheme, MCS) field.

Optionally, a manner of indicating the slot in which the group SPS PDSCH is located, and S and L is as follows: The foregoing DCI that is carried on the PDCCH and that is scrambled by the G-CS-RNTI indicates a row in a time domain resource table. The time domain resource table may be a table predefined by a protocol or a table configured by using higher layer signaling. The table includes a plurality of rows, and each row includes parameters K0, S, and L. K0 indicates a quantity of slots between a slot in which a PDCCH is located and a slot in which a PDSCH is located. S and L may be jointly encoded as one parameter: a start and length indicator value (start and length indicator value, SLIV), or two independent parameters, which are represented by (S, L). For example, Table 1 shows a time domain resource table. DCI may specifically include a bit field indicating a row index (index), and the bit field may occupy 2 bits (bits). For example, if the DCI includes an index 1, it represents that the DCI indicates that K0 is 1 and (S, L) is (1, 2). In other words, if a terminal device receives, in an $n^{th}$ slot, the DCI scrambled by the G-CS-RNTI, the terminal device may receive, in an $(n+1)^{th}$ slot, the group SPS PDSCH scheduled by the DCI. Specifically, the terminal device receives, on a symbol 1 and a symbol 2 in the $(n+1)^{th}$ slot, the group SPS PDSCH scheduled by the DCI.

Table 1

| Index (Index) | K0 | (S, L) |
|---|---|---|
| 0 | 1 | (2, 4) |
| 1 | 1 | (1, 2) |
| 2 | 2 | (3, 4) |

(continued)

| Index (Index) | K0 | (S, L) |
|---|---|---|
| 3 | 2 | (0, 7) |

Optionally, a method for indicating the slot in which the feedback information corresponding to the group SPS PDSCH is located is as follows: The DCI includes one piece of indication information. Specifically, a PDSCH-to-HARQ_feedback timing indicator bit field may be used to represent the indication information. A quantity of bits that can be occupied by the bit field is [0, 3]. The bit field indicates a specific moment at which the terminal device performs feedback, to be specific, sends the corresponding feedback information, after receiving the group SPS PDSCH. Optionally, the indication information may be a value of K1 in a K1 set. The K1 set (for example, a dl-DataToUL-ACK field) may be a set configured by using higher layer signaling. The value of K1 indicates a quantity of slots between the slot in which the group SPS PDSCH is located and the corresponding feedback information. It is assumed that the group SPS PDSCH is in the $(n+1)^{th}$ slot. In this case, the feedback information corresponding to the group SPS PDSCH is in an $(n+1+K1)^{th}$ slot. For example, the value of K1 may be 4, and the feedback information is specifically ACK information or NACK information. The slot may alternatively be a sub-slot.

After determining a feedback slot of the group SPS PDSCH based on the indication of the DCI, the terminal device further needs to determine a specific feedback resource that can be occupied by the feedback information. A manner of determining the feedback resource by the terminal device may be implemented with reference to the following manner:

The terminal device first determines a bit quantity of the feedback information that corresponds to the group SPS PDSCH and that needs to be fed back in the feedback slot, for example, uses a sum of bit quantities of all feedback information that is of the group SPS PDSCH and that needs to be fed back in the feedback slot as the bit quantity of the feedback information, and then selects, based on the bit quantity of the feedback information, a PUCCH resource from a semi-persistent scheduling PUCCH resource set pre-configured by the network device, to send the feedback information of the group SPS PDSCH.

For example, it is assumed that the network device configures four PUCCH resources for the terminal device. If the bit quantity of the feedback information is less than or equal to 2, a 1st PUCCH resource is used to send the feedback information of the group SPS PDSCH. If the bit quantity is from 3 to N1, a 2nd PUCCH resource is used. If the feedback bit quantity is greater than N1 and less than or equal to N2, a 3rd PUCCH resource is used. If the feedback bit quantity is greater than N2 and less than or equal to N3, a fourth PUCCH resource is used. N1 is less than N2 and greater than 2, and N2 is less than N3. N1, N2, and N3 are also indicated by the network device by sending configuration information (for example, in higher layer signaling). If no indication is performed, N3 is 1706 by default.

Optionally, the DCI scrambled by the G-CS-RNTI may further include information indicating a specific semi-persistent scheduling SPS configuration that is activated by using the DCI. For example, if the network device configures a plurality of SPS configurations for the terminal device, specifically, a HARQ process number (HARQ process number, HPN) bit field in the DCI may indicate the foregoing activated semi-persistent scheduling SPS configuration, and a quantity of bits that can be occupied by the bit field is [0, 4]. The terminal device may determine, by using a value of the HARQ process number, to activate a multicast based semi-persistent scheduling SPS transmission, and specifically, this corresponds to activating an SPS configuration with a specific sequence number in the plurality of SPS configurations. Alternatively, if the network device configures one SPS configuration for the terminal device, a value of the HARQ process number in the DCI is 0 by default.

Optionally, the DCI scrambled by the G-CS-RNTI may further include information indicating that the group SPS PDSCH scheduled by the DCI is initially transmitted data. For example, the DCI may include one bit field, and the bit field is denoted as a new data indicator (new data indicator, NDI). A value 0 of the NDI indicates that the group SPS PDSCH scheduled by the DCI is the initially transmitted data.

Further, the network device subsequently sends the group SPS PDSCH, and does not need to first send DCI for scheduling, and the terminal device receives the group SPS PDSCH based on the activated SPS configuration. Refer to FIG. 2. The network device sends, in a time unit 1 before sending a group SPS PDSCH for the first time in a time unit 2, DCI scrambled by a G-CS-RNTI, to schedule a group SPS PDSCH. The DCI is used to activate a multicast based semi-static SPS transmission. Optionally, the DCI includes information indicating a semi-persistent scheduling SPS configuration, and the DCI is specifically used to activate the SPS configuration. When the network device sends the group SPS PDSCH in a subsequent time unit, the network device no longer needs to send other DCI, and the terminal device may receive a subsequent group SPS PDSCH based on the foregoing activated SPS configuration. For example, FIG. 2 shows that the terminal device subsequently periodically receives the group SPS PDSCH in time units 3 to 6 without a need to receive DCI.

It should be noted that the time unit herein is a time unit for SPS scheduling, and is a time domain concept.

The time unit may be in a unit of a frame, a subframe, a slot, or a symbol. For example, in a 5G NR system, a subcarrier spacing of 15 kHz is used, and a time length of one slot is 1 ms. When an extended cyclic prefix is used, one slot includes 12 symbols. When a normal cyclic prefix is used, one slot includes 14 symbols. The symbol herein, which is alternatively referred to as a time domain symbol, may be an orthogonal frequency division multiplexing (orthogonal frequency division multiplexing, OFDM) symbol. It may be understood that the time units 1 to 6 in FIG. 2 do not mean that the time units 1 to 6 are consecutive time units. For example, there is one SPS periodicity between two adjacent time units between the time units 2 to 6.

Optionally, the terminal device may determine, based on an SPS transmission periodicity P configured by a higher layer, a slot location in which the subsequent group SPS PDSCH is located. For example, if the SPS transmission periodicity P is 1 ms, time domain duration of one slot (slot) is 1 ms, and the group SPS PDSCH of the first time is on the symbol 1 and the symbol 2 in the (n+1)th slot, when multicast SPS is activated, a location of the group SPS PDSCH occupies a symbol 1 and a symbol 2 in each slot, starting from the (n+1)th slot, where n is an integer greater than 1. It may be understood that the time unit shown in FIG. 2 may be a slot. In this case, in an example, FIG. 2 shows that the time unit 1 in which the DCI scrambled by the G-CS-RNTI is the nth slot, and the location of the group SPS PDSCH is each of the time unit 3, the time unit 4, and the like, starting from the (n+1)th slot, that is, starting from the time unit 2. In addition, the transmission periodicity P may alternatively be another value, which depends on a higher layer configuration. For example, if the SPS transmission periodicity P configured by the higher layer is 2 ms, and the group SPS PDSCH of the first time is on the symbol 1 and the symbol 2 in the (n+1)th slot, when multicast SPS is activated, a location of the group SPS PDSCH occupies a symbol 1 and a symbol 2 in each of slots at an interval of one slot, starting from the (n+1)th slot, that is, the location of the group SPS PDSCH is an (n+1+x*2)th slot, where x is an integer greater than or equal to 0. It may be understood that, in this example, it is assumed that duration of one time unit is 1 ms, in this case, if the SPS transmission periodicity is 1 ms, the SPS transmission periodicity corresponds to one time unit, in other words, an SPS PDSCH is transmitted in each time unit; and if the SPS transmission periodicity is 2 ms, the SPS transmission periodicity corresponds to two time units, in other words, an SPS PDSCH is transmitted at an interval of one time unit.

The foregoing higher layer may be understood as a higher-layer protocol layer, and includes at least one protocol layer above a physical layer: a media access control (media access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS). Correspondingly, in embodiments of this application, the higher layer signaling may be NAS signaling, an RRC message, or a media access control (media access control, MAC) control element (control element, CE). The RRC message may include a dedicated RRC message or a broadcast/multicast RRC message. This is not limited in embodiments of this application.

A2: Retransmitting data related to a multicast based semi-persistent scheduling transmission

A retransmission of a group SPS PDSCH may be implemented in the following three cases:

Case 1: If feedback information of the group SPS PDSCH is NACK information for many terminal devices, to be specific, the many terminal devices do not successfully receive the group SPS PDSCH, a network device may send retransmitted data of the group SPS PDSCH in multicast mode, in other words, retransmit the group SPS PDSCH.

A quantity threshold may be set. If in a group of terminal devices, terminal devices whose quantity is greater than or equal to the specified quantity threshold do not successfully receive the group SPS PDSCH sent by the network device, and all feed back NACK information to the network device, the network device may determine that many terminal devices do not successfully receive the group SPS PDSCH. For example, a group of terminal devices include six terminal devices, and a specified quantity threshold may be three. When feedback information sent by three or more terminal devices to the network device is NACK information, the network device may send, in multicast mode, retransmitted data of a group SPS PDSCH that is not successfully received.

For example, after receiving the NACK information sent by the plurality of terminal devices, the network device may send, to the plurality of terminal devices in multicast mode, one piece of DCI scrambled by a G-CS-RNTI. The DCI herein is used to schedule the retransmitted data, and the retransmitted data may be retransmitted data of one of a plurality of SPS PDSCHs using the foregoing activated multicast based SPS transmission. The DCI includes an NDI, and a value 1 of the NDI indicates that a PDSCH scheduled by the DCI is retransmitted data. The DCI may further include an HPN, indicating a HARQ process occupied by a retransmission. Optionally, the HARQ process that is occupied by the retransmission and that is indicated by the HPN is the same as a HARQ process calculated based on an activated SPS configuration. In other words, the terminal device receives the DCI scrambled by the G-CS-RNTI, may learn, based on the NDI whose value is 1 in the DCI, that the DCI schedules the retransmitted data, and may learn of, based on the HPN in the DCI, the HARQ process occupied for receiving the retransmitted data, to facilitate soft combination (soft combination) of the retransmitted data.

Case 2: If feedback information of the group SPS PDSCH is NACK information for a few terminal devices, to be specific, the few terminal devices do not successfully receive the group SPS PDSCH, a network device may separately send retransmitted data of the group SPS PDSCH in unicast mode to the terminal devices that do not successfully receive the group SPS PDSCH.

A quantity threshold may be set. If in a group of receiving terminal devices, terminal devices whose quantity is less than the specified quantity threshold do not successfully receive the group SPS PDSCH sent by the network device, and feed back NACK information to the network device, the network device may determine that a few terminal devices do not successfully receive the group SPS PDSCH. For example, a group of terminal devices include six terminal devices, and a specified quantity threshold may be 3. When feedback information sent by one or two terminal devices to the network device is NACK information, the network device may send, in unicast mode, retransmitted data of a group SPS PDSCH that is not successfully received.

Case 3: A network device configures or notifies retransmission scheduling manners of terminal devices. Specifically, in a group of terminal devices, the network device configures or notifies that retransmission scheduling manners of some terminal devices are unicast based, and configures or notifies that retransmission scheduling manners of some terminal devices are multicast based. If a terminal device whose retransmission scheduling manner is configured or notified to be unicast based does not successfully receive a group SPS PDSCH sent by the network device, and feeds back NACK information to the network device, the network device transmits retransmitted data of the group SPS PDSCH to the terminal device through unicast based retransmission scheduling. If a terminal device whose a retransmission scheduling manner is configured or notified to be multicast based does not successfully receive a group SPS PDSCH sent by the network device, and feeds back NACK information to the network device, the network device transmits retransmitted data of the group SPS PDSCH to the terminal device through multicast based retransmission scheduling. For example, a group of terminal devices include six terminal devices, a terminal device #1 is configured with the unicast based retransmission scheduling, and terminal devices #2 to #6 are configured with the multicast based retransmission scheduling. If feedback information sent by the terminal device #1 to the network device is NACK information, the network device may send, to the terminal device #1 in unicast mode, retransmitted data of a group SPS PDSCH that is not successfully received. If feedback information sent by any one of the terminal devices #2 to #6 to the network device is NACK information, the network device sends, to the terminal devices #2 to #6 in multicast mode, retransmitted data of a group SPS PDSCH that is not successfully received.

Optionally, after receiving NACK information sent by a terminal device, the network device may send, to the terminal device, DCI scrambled by a configured scheduling radio network temporary identifier (configured scheduling network temporary identifier, CS-RNTI). The DCI is used to schedule retransmitted data. The DCI includes an NDI, and a value 1 of the NDI indicates that a group SPS PDSCH scheduled by the DCI is retransmitted data. The DCI herein includes an HPN field indicating a HARQ process occupied by a retransmission. Optionally, the HARQ process that is occupied by the retransmission and that is indicated by the HPN is the same as a HARQ process calculated based on an activated SPS configuration. In other words, the terminal device receives the DCI scrambled by the CS-RNTI, may learn, based on the NDI whose value is 1 in the DCI, that the DCI schedules the retransmitted data, and learns of, based on the HPN in the DCI, the HARQ process occupied for receiving the retransmitted data, to facilitate soft combination of the retransmitted data. It should be noted that, in embodiments of this application, the CS-RNTI identifies a unicast transmission, and may be configured by the network device for a single terminal device. Certainly, the CS-RNTI may alternatively be replaced with another identifier, provided that the another identifier can identify the unicast transmission. This is not limited in embodiments of this application. It may be understood that, if a terminal device 1 and a terminal device 2 send NACKs, the network device separately sends DCI to the two terminal devices. For example, the network device sends DCI scrambled by a CS-RNTI of the terminal device 1 to the terminal device 1, and retransmits the foregoing SPS PDSCH to the terminal device 1 in unicast mode; and sends DCI scrambled by a CS-RNTI of the terminal device 2 to the terminal device 2, and retransmits the foregoing SPS PDSCH to the terminal device 2 in unicast mode.

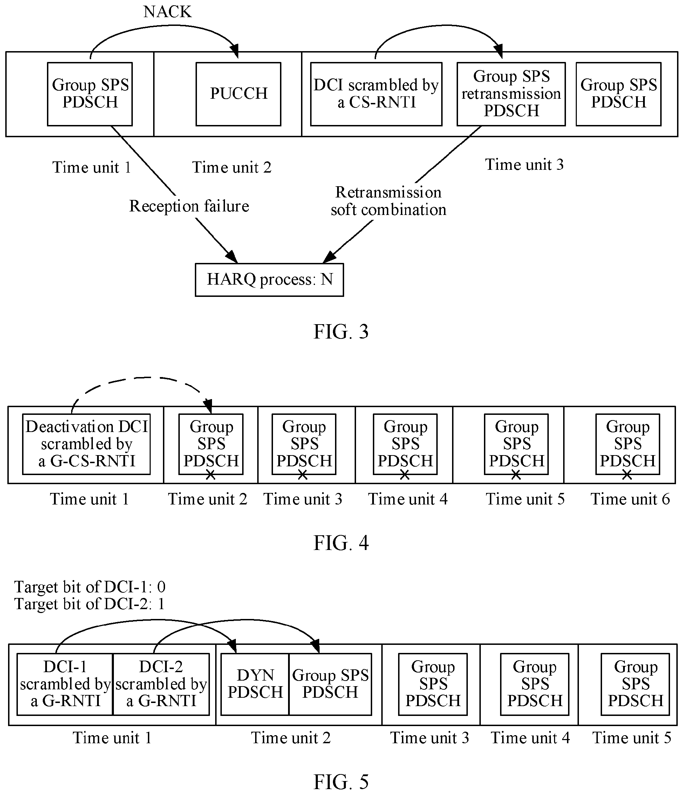

For example, FIG. 3 shows a mechanism of the foregoing unicast retransmission scheduling. It is assumed that a single terminal device does not successfully receive, in the time unit 1, a group SPS PDSCH sent by the network device. In this case, the single terminal device determines, based on the PDSCH-to-HARQ_feedback timing indicator in the DCI scrambled by the G-CS-RNTI in the activation phase A1, that a feedback time unit of feedback information is the time unit 2, and sends NACK information to the network device on a PUCCH in the time unit 2. After receiving the PUCCH, the network device determines that the terminal device feeds back a NACK. In this case, the network device sends retransmitted data of a group SPS PDSCH to the terminal device in unicast mode. Specifically, the network device sends, to the terminal device in the time unit 3, DCI scrambled by a CS-RNTI, and the terminal device blindly detects, on the PDCCH, the DCI scrambled by the CS-RNTI. A HARQ process indicated by an HPN in the DCI is the same as the HARQ process calculated based on the activated SPS configuration. For example, both are a HARQ process N. If an NDI value in the DCI is 1, the terminal device knows that the DCI scrambled by the CS-RNTI schedules retransmitted data, and the retransmitted data is the retransmitted data of the foregoing SPS PDSCH. In this case, after receiving the retransmitted data of the group SPS PDSCH, the terminal device may perform soft combination with data in an initially transmitted group SPS PDSCH.

In embodiments of this application, the network device may perform retransmission scheduling on multicast SPS data by using DCI scrambled by a CS-RNTI, in other words, send retransmitted data of a group SPS PDSCH to a single terminal device in unicast mode. In this manner, no new RNTI is introduced, and a resource used by the terminal device to blindly detect the DCI can be saved.

A3: Deactivating a multicast based semi-persistent scheduling transmission

A network device may send, to a plurality of terminal devices, deactivation DCI scrambled by a G-CS-RNTI. In the deactivation DCI, a Redundancy Version field is all 0, a modulation and coding scheme (Modulation and coding scheme) field is all 1, and a frequency domain resource assignment (Frequency domain resource assignment) field is all 1 (namely, Type1) or all 0 (namely, Type0). The terminal device may know, based on the foregoing information in the deactivation DCI, that the deactivation DCI is used to deactivate a multicast based semi-persistent scheduling SPS transmission. The deactivation DCI further includes other information such as an HPN. A value of the HPN may be the same as the value of the HPN in the DCI in the activation phase (A1). The terminal device may deactivate, based on the HPN in the deactivation DCI, an SPS configuration indicated by the HPN, and no longer receive, in a subsequent time unit, a group SPS PDSCH of the deactivated SPS configuration. For example, as shown in FIG. 4, the network device sends, in the time unit 1, the deactivation DCI scrambled by the G-CS-RNTI. In this case, the terminal device blindly detects the deactivation DCI on a PDCCH, and determines, based on the HPN in the deactivation DCI, to no longer receive the group SPS PDSCH of the SPS configuration corresponding to the HPN. In FIG. 4, specifically, "×" represents that the terminal device no longer receives the group SPS PDSCH in the time units 2 to 6, or it may be understood that the network device no longer sends the group SPS PDSCH in the time units 2 to 6.

It should be noted that the solution 1 may include one or more of the foregoing phases A1 to A3, and an execution sequence of the phases A1 to A3 may be determined based on an actual requirement. This is not limited in embodiments of this application.

Solution 2:

DCI may include indication information that indicates a dynamic scheduling transmission or a semi-persistent scheduling SPS transmission. The DCI and a group-radio network temporary identifier (group-radio network temporary identifier, G-RNTI) jointly indicate multicast dynamic scheduling or multicast semi-persistent scheduling. It should be noted that the G-RNTI identifies a multicast transmission, and may be configured by the network device for a group of terminal devices. Certainly, the G-RNTI may alternatively be replaced with another identifier, provided that the another identifier can identify the multicast transmission. This is not limited in embodiments of this application.

In an optional implementation, the DCI may include a target bit field indicating dynamic scheduling or semi-persistent scheduling SPS. The target bit field may occupy 1 bit. When a value of the target bit field is 0, it represents that the DCI indicates the dynamic scheduling; or when a value of the target bit field is 1, it represents that the DCI indicates the semi-persistent scheduling SPS. Alternatively, in the other way around, when a value of the target bit field is 1, it represents that the DCI indicates the dynamic scheduling; or when a value of the target bit field is 0, it represents that the DCI indicates the semi-persistent scheduling SPS.

In another optional implementation, considering that both the multicast dynamic scheduling and the multicast semi-persistent scheduling are downlink communication, when the DCI and a G-RNTI jointly indicate the multicast dynamic scheduling or the multicast semi-persistent scheduling, descriptions of an Identifier for DCI formats field in a conventional DCI format may be changed, and a value of the Identifier for DCI formats field is used to distinguish between the multicast dynamic scheduling or the multicast semi-persistent scheduling. For example, if the value of the Identifier for DCI formats field in the DCI is 0, it represents that the DCI indicates the dynamic scheduling; or if the value of the Identifier for DCI formats field in the DCI is 1, it represents that the DCI indicates the semi-persistent scheduling SPS. Alternatively, in the other way around, if the value of the Identifier for DCI formats field in the DCI is 1, it represents that the DCI indicates the dynamic scheduling; or if the value of the Identifier for DCI formats field in the DCI is 0, it represents that the DCI indicates the semi-persistent scheduling SPS.

Optionally, based on the foregoing manner in which the G-RNTI and the DCI perform joint indication, activation of multicast semi-persistent scheduling, a retransmission related to multicast semi-persistent scheduling, and deactivation of multicast semi-persistent scheduling may be implemented with reference to manners in the following B1 to B3.

B1: Activating a multicast based semi-persistent scheduling transmission

A network device may configure a same group-radio network temporary identifier (group-radio network temporary identifier, G-RNTI) for a plurality of terminal devices. Before sending same downlink data (namely, a group SPS PDSCH) to the plurality of terminal devices for the first time, the network device sends one piece of DCI scrambled by the G-RNTI. The DCI includes information indicating the multicast based semi-persistent scheduling transmission, for example, the foregoing target bit field. The terminal device blindly detects, on a PDCCH, the DCI scrambled by the G-RNTI, and determines that the DCI includes information indicating an SPS configuration. In this case, the terminal device may activate the multicast SPS configuration based on the DCI scrambled by the G-RNTI, and receive the group SPS PDSCH sent by the network device for the first time.

Optionally, the DCI that is used for the activation and that is scrambled by the G-RNTI may also be understood as activation DCI. For other content included in the DCI that is sent by the network device and that is scrambled by the G-RNTI, refer to descriptions of content included in the DCI scrambled by the G-CS-RNTI in A1. Details are not described again in embodiments of this application.

Further, the network device subsequently sends the group SPS PDSCH, and does not need to first send DCI for scheduling, and the terminal device receives the group SPS PDSCH based on the activated SPS configuration. Refer to FIG. 5. The network device sends, in a time unit 1 before sending a group SPS PDSCH for the first time in a time unit 2, DCI scrambled by a G-RNTI, to schedule a group SPS PDSCH. The DCI is used to activate a multicast based semi-static SPS transmission. Optionally, the DCI includes information indicating a semi-persistent scheduling SPS configuration, and the DCI is specifically used to activate the SPS configuration. When the network device sends the group SPS PDSCH in a subsequent time unit, the network device no longer needs to send other DCI, and the terminal device may receive a subsequent group SPS PDSCH based on the foregoing activated SPS configuration. For example, FIG. 5 shows that the terminal device subsequently periodically receives the group SPS PDSCH in time units 3 to 5 without a need to receive other DCI.

In addition, the network device may alternatively perform multicast dynamic scheduling while performing multicast semi-persistent scheduling. FIG. 5 further shows that in the time unit 1 before the time unit 2 in which the network device sends, for the first time, data using a multicast based dynamic scheduling transmission, for example, a dynamic scheduling PDSCH (Dynamic scheduling PDSCH, DYN PDSCH), the network device sends the DCI scrambled by the G-RNTI, to schedule the DYN PDSCH. The DCI herein includes information indicating the dynamic scheduling. In this case, the terminal device can blindly detect, on the PDCCH in the time unit 1, two pieces of DCI scrambled by G-RNTIs. For the purpose of distinguishing, DCI-1 and DCI-2 are used for representation in FIG. 5. The DCI-1 schedules the DYN PDSCH in the time unit 2. The DCI-2 schedules the group SPS PDSCH in the time unit 2 and a subsequent time unit. An example in which the value 0 of the foregoing target bit represents the dynamic scheduling and the value 1 of the target bit represents the semi-persistent scheduling is used. In this case, a value of a target bit in the DCI-1 is 0, and a value of a target bit in the DCI-2 is 1.

B2: Retransmitting data related to a multicast based semi-persistent scheduling transmission

A retransmission of a group SPS PDSCH may be implemented in the following three cases:

Case 1: If feedback information of the group SPS PDSCH is NACK information for many terminal devices, to be specific, the many terminal devices do not successfully receive the group SPS PDSCH, a network device may send retransmitted data of the group SPS PDSCH in multicast mode.

Optionally, the network device may schedule the retransmitted data of the foregoing group SPS PDSCH based on DCI scrambled by a G-RNTI. A specific implementation may be executed with reference to the solution in Case 1 in A2. Details are not described again in embodiments of this application.

Case 2: If feedback information of the group SPS PDSCH is NACK information for a few terminal devices, to be specific, the few terminal devices do not successfully receive the group SPS PDSCH, a network device may separately send retransmitted data of the group SPS PDSCH in unicast mode to the terminal devices that do not successfully receive the group SPS PDSCH.

Optionally, the network device may schedule the retransmitted data of the foregoing group SPS PDSCH based on DCI scrambled by a CS-RNTI. A specific implementation may be executed with reference to the solution in Case 2 in A2. Details are not described again in embodiments of this application.

Case 3: If a terminal device whose retransmission scheduling manner is configured or notified to be unicast based does not successfully receive a group SPS PDSCH, and sends feedback information NACK, the network device sends, in the unicast based retransmission scheduling manner, the retransmitted data of the group SPS PDSCH to the terminal device whose retransmission scheduling manner is configured or notified to be unicast based. If a terminal device whose retransmission scheduling manner is configured or notified to be multicast based does not successfully receive a group SPS PDSCH, and sends feedback information NACK, the network device sends, in the multicast based retransmission scheduling manner, the retransmitted data of the group SPS PDSCH to the terminal device whose retransmission scheduling manner is configured or notified to be multicast based.

Optionally, the network device may schedule, based on DCI scrambled by a CS-RNTI, the retransmitted data of the foregoing group SPS PDSCH to the terminal device whose retransmission scheduling manner is configured to be unicast based, and may schedule, based on DCI scrambled by a G-RNTI or a G-CS-RNTI, the retransmitted data of the foregoing group SPS PDSCH to the terminal device whose retransmission scheduling manner is configured to be multicast based. A specific implementation may be executed with reference to the solution in Case 3 in A2. Details are not described again in embodiments of this application.

B3: Deactivating a multicast based semi-persistent scheduling transmission

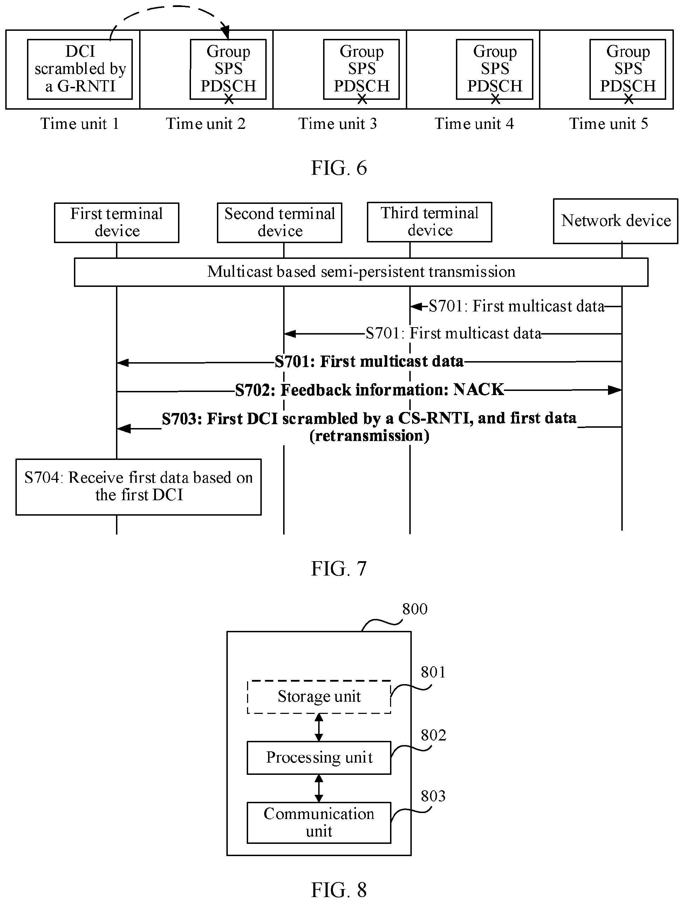

A network device may send, to a plurality of terminal devices, deactivation DCI scrambled by a G-RNTI. In the deactivation DCI, a Redundancy Version field is all 0, a modulation and coding scheme (Modulation and coding scheme) field is all 1, and a frequency domain resource assignment (Frequency domain resource assignment) field is all 1 (namely, Type1) or all 0 (namely, Type0). The terminal device may know, based on the foregoing information in the deactivation DCI, that the deactivation DCI is used to deactivate multicast semi-persistent scheduling SPS. The deactivation DCI further includes other information such as an HPN. A value of the HPN may be the same as the value of the HPN in the DCI in the activation phase (A1). The terminal device may deactivate, based on the HPN in the deactivation DCI, an SPS configuration indicated by the HPN, and no longer receive, in a subsequent time unit, a group SPS PDSCH of the deactivated SPS configuration. For example, as shown in FIG. 6, the network device sends, in the time unit 1, the deactivation DCI scrambled by the G-RNTI. In this case, the terminal device blindly detects the deactivation DCI on a PDCCH, and determines, based on the HPN in the deactivation DCI, to no longer receive the group SPS PDSCH of the SPS configuration corresponding to the HPN. In FIG. 6, specifically, "×" represents that the terminal device no longer receives the group SPS PDSCH in the time units 2 to 5, or it may be understood that the network device no longer sends the group SPS PDSCH in the time units 2 to 5.

It should be noted that the solution 1 may include one or more of the foregoing phases B1 to B3, and an execution sequence of the phases B1 to B3 may be determined based on an actual requirement. This is not limited in embodiments of this application.

According to the foregoing solution 2 provided in embodiments of this application, a manner of indicating semi-persistent scheduling or dynamic scheduling is defined in DCI, so that a G-RNTI can be used to dynamically schedule multicast data or semi-persistently schedule the multicast data. This expands an application scenario of the G-RNTI, saves blind detection resources on a terminal device side, and reduces control signaling overheads during scheduling of multicast downlink data.

Based on the foregoing solution 1 and solution 2, refer to FIG. 7. An embodiment of this application provides a schematic flowchart of a data transmission method. The method includes the following procedure.

S701: A network device may send first multicast data to a plurality of terminal devices in a multicast semi-persistent scheduling manner, in other words, each terminal device can receive the first multicast data using a multicast based semi-persistent scheduling SPS transmission. For example, FIG. 7 shows three terminal devices, which are denoted as a first terminal device, a second terminal device, and a third terminal device. It should be noted that in FIG. 7, the network device does not send the first multicast data for three times, but sends the first multicast data only once, and all the three terminal devices can receive the multicast data. The first multicast data using the multicast based semi-persistent scheduling SPS transmission may be interpreted as "first multicast data using a multi-cast based SPS transmission".

The multicast based semi-persistent scheduling transmission mainly includes the following transmission in an activation phase and transmission after activation. During the transmission in the activation phase, the multicast based semi-persistent scheduling SPS transmission needs to be activated by using DCI. In the activation phase, the first multicast data sent by the network device may be understood as data having scheduling information. After the activation, the first multicast data sent by the network device may be understood as data having no scheduling information or data having no DCI.

In an optional implementation, the implementation corresponds to A1 in the foregoing solution 1. The network device may send one piece of second DCI scrambled by a group-configured scheduling-radio network temporary identifier G-CS-RNTI to the plurality of terminal devices, where the second DCI is used to activate the multicast based semi-persistent scheduling SPS transmission. In this case, each terminal device may activate the multicast based semi-persistent scheduling SPS transmission based on the second DCI, and receive the foregoing first multicast data scheduled by the second DCI and subsequent first multicast data that has no scheduling information.

In another optional implementation, the implementation corresponds to B1 in the foregoing solution 2. The network device may send third DCI scrambled by a group-radio network temporary identifier G-RNTI to the plurality of terminal devices, where the third DCI is used to activate the multicast based semi-persistent scheduling SPS transmission. In this case, a value of first indication information included the third DCI is a first value. The value of the first indication information includes the first value or a second value, the first value indicates the multicast based semi-persistent scheduling SPS transmission, and the second value indicates a multicast based dynamic scheduling transmission. Optionally, the first indication information may be the target bit or Identifier for DCI formats described in the foregoing solution 2. The first value may be 0, and the second value may be 1; or the first value may be 1, and the second value may be 0. In this case, each terminal device may activate the multicast based semi-persistent scheduling SPS transmission based on the third DCI, and receive the foregoing first multicast data scheduled by the third DCI and subsequent first multicast data that has no scheduling information.

In addition, it should be noted that the third DCI does not include information indicating that the third DCI is used to schedule an uplink transmission or a downlink transmission. For example, when the target bit is used in the third DCI to indicate the multicast based semi-persistent scheduling transmission or the multicast based dynamic scheduling transmission, the third DCI does not include Identifier for DCI formats. When Identifier for DCI formats is used in the third DCI to indicate the multicast based semi-persistent scheduling transmission or the multicast based dynamic scheduling transmission, descriptions or a definition of Identifier for DCI formats cannot indicate that the third DCI is used to schedule an uplink transmission or a downlink transmission.

Optionally, if a new data indicator NDI value in the second DCI is 0, it represents that the second DCI schedules initially transmitted data; and if a new data indicator NDI value in the third DCI is 0, it represents that the third DCI schedules initially transmitted data.

S702: The network device receives feedback information NACK of the first terminal device, in other words, the first terminal device does not successfully receive the foregoing first multicast data.

S703: The network device sends first DCI scrambled by a CS-RNTI and first data to the first terminal device, where the first data is retransmitted data of the first multicast data, and the first data may be understood as data using a unicast based transmission.

Optionally, if a new data indicator NDI value in the first DCI is 1, it represents that the first DCI schedules retransmitted data.

In addition, it should be noted that, if the network device receives a large amount of NACK information, for example, if the network device receives feedback information NACK of both the first terminal device and the second terminal device, based on the RNTI used in the foregoing activation phase, the network device may perform multicast retransmission scheduling based on the G-CS-RNTI or the G-RNTI, for example, send second multicast data. The second multicast data is retransmitted data of the first multicast data, and the second multicast data may be understood as multicast data. For a specific implementation, refer to the solutions in A2 and B2. Details are not described again in this embodiment of this application.

S704: The terminal device receives the first DCI, and receives the first data based on the first DCI.

In this embodiment of this application, a multicast transmission is performed through semi-persistent scheduling, without a need to send scheduling information, namely, DCI, before multicast data is sent each time, so that control signaling overheads can be reduced. In addition, when an individual terminal device does not successfully receive the multicast data, the multicast data is retransmitted to the terminal device in unicast mode instead of scheduling a data retransmission in multicast mode. In this way, downlink resource occupation can be further reduced and data transmission efficiency can be improved.

Further, when the SPS transmission needs to be deactivated, the network device may further send fourth DCI scrambled by a G-RNTI or a G-CS-RNTI, where the fourth DCI is used to deactivate the multicast based semi-persistent scheduling SPS transmission. Content included in the fourth DCI may be executed with reference to the manner in A3 or B3. Details are not described again.

Based on a same idea, FIG. 8 provides a possible example block diagram of a data transmission apparatus according to this application. The apparatus 800 may exist in a form of software or hardware. The apparatus 800 may include a processing unit 802 and a communication unit 803. In an implementation, the communication unit 803 may include a receiving unit and a sending unit. The processing unit 802 is configured to control and manage an action of the apparatus 800. The communication unit 803 is configured to support the apparatus 800 in communicating with another network entity. The apparatus 800 may further include a storage unit 801, configured to store program code and data of the apparatus 800.

The processing unit 802 may be a processor or a controller, for example, a general-purpose central processing unit (central processing unit, CPU), a general-purpose processor, digital signal processor (digital signal processor, DSP), an application-specific integrated circuit (application-specific integrated circuits, ASIC), a field programmable gate array (field programmable gate array, FPGA), another programmable logic device, a transistor logic device, a hardware component, or any combination thereof. The processing unit may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The storage unit 801 may be a memory. The communication unit 803 is an interface circuit of the apparatus, and is configured to receive a signal from another apparatus. For example, when the apparatus is implemented in a form of a chip, the communication unit 803 is an interface circuit used by the chip to receive a signal from another chip or apparatus, or is an interface circuit used by the chip to send a signal to another chip or apparatus.

In a solution, the apparatus 800 may be the terminal device in any one of the foregoing embodiments, or may be a chip used in the terminal device. For example, when the apparatus 800 is the terminal device, the processing unit 802 may be, for example, a processor, and the communication unit 803 may be, for example, a transceiver. Optionally, the transceiver may include a radio frequency circuit, and the storage unit may be, for example, a memory. For example, when the apparatus 800 is the chip used in the terminal device, the processing unit 802 may be, for example, a processor, and the communication unit 803 may be, for example, an input/output interface, a pin, or a circuit. The processing unit 802 may execute computer-executable instructions stored in the storage unit. Optionally, the storage unit is a storage unit inside the chip, such as a register or a cache. Alternatively, the storage unit may be a storage unit that is inside the terminal device and that is located outside the chip, such as a read-only memory (read-only memory, ROM), another type of static storage device that can store static information and instructions, or a random access memory (random access memory, RAM).

The following describes in detail functions, which are alternatively referred to as operations, performed by units included in the apparatus 800 that is used in a terminal device.

The communication unit 803 is configured to receive first multicast data using a multicast based semi-persistent scheduling SPS transmission.

The communication unit 803 is further configured to receive first downlink control information DCI, where the first DCI is scrambled by a configured scheduling radio network temporary identifier CS-RNTI.

The processing unit 802 is configured to receive, through the communication unit 803, first data based on the first DCI, where the first data is retransmitted data of the first multicast data.

In this embodiment of this application, a multicast transmission is performed through semi-persistent scheduling, without a need to send scheduling information, namely, DCI, before multicast data is sent each time, so that control signaling overheads can be reduced. In addition, when data needs to be retransmitted to an individual terminal device, the multicast data is retransmitted to the terminal device in unicast mode instead of scheduling a data retransmission in multicast mode. In this way, downlink resource occupation can be further reduced and data transmission efficiency can be improved.

In an optional implementation, before the communication unit 803 receives the first DCI, the processing unit 802 is further configured to: determine that the receiving of the first multicast data fails, and send feedback information such as a NACK, where the feedback information indicates that the receiving of the first multicast data fails.

In an optional implementation, the communication unit 803 is further configured to receive second DCI scrambled by a group-configured scheduling-radio network temporary identifier G-CS-RNTI, where the second DCI is used to activate the multicast based semi-persistent scheduling SPS transmission.

In an optional implementation, the communication unit 803 is further configured to receive third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0.

In an optional implementation, the communication module is further configured to: receive fourth DCI scrambled by a group-radio network temporary identifier G-RNTI, where the fourth DCI is used to deactivate the multicast based semi-persistent scheduling SPS transmission; or receive fourth DCI scrambled by a group-configured scheduling-radio network temporary identifier G-CS-RNTI, where the fourth DCI is used to deactivate the multicast based semi-persistent scheduling SPS transmission.

In another solution, the apparatus 800 may be the network device in any one of the foregoing embodiments, or may be a chip used in the network device. For example, when the apparatus 800 is the network device, the processing unit 802 may be, for example, a processor, and the communication unit 803 may be, for example, a transceiver. Optionally, the transceiver may include a radio frequency circuit, and the storage unit may be, for example, a memory. For example, when the apparatus 800 is the chip used in the network device, the processing unit 802 may be, for example, a processor, and the communication unit 803 may be, for example, an input/output interface, a pin, or a circuit. The processing unit 802 may execute computer-executable instructions stored in the storage unit. Optionally, the storage unit is a storage unit in the chip, such as a register or a cache. The storage unit may alternatively be a storage unit, such as a read-only memory (read-only memory, ROM) or another type of static storage device that can store static information and instructions, and a random access memory (random access memory, RAM), that is located outside the chip and that is inside the network device.

The following describes in detail functions, which are alternatively referred to as operations, performed by units included in the apparatus 800 that is used in a network device.

The processing unit 802 is configured to generate first multicast data using a multicast based semi-persistent scheduling SPS transmission.

The communication unit 803 is configured to send the first multicast data.

The communication unit 803 is further configured to send first downlink control information DCI, where the first DCI is scrambled by a configured scheduling radio network temporary identifier CS-RNTI, the first DCI is used to schedule first data, and the first data is retransmitted data of the first multicast data.

In this embodiment of this application, a multicast transmission is performed through semi-persistent scheduling, without a need to send scheduling information, namely, DCI, before multicast data is sent each time, so that control signaling overheads can be reduced. In addition, when data needs to be retransmitted to an individual terminal device, the multicast data is retransmitted to the terminal device in unicast mode instead of scheduling a data retransmission in multicast mode. In this way, downlink resource occupation can be further reduced and data transmission efficiency can be improved.

In an optional implementation, the communication unit 803 is further configured to send second DCI scrambled by a group-configured scheduling-radio network temporary identifier G-CS-RNTI, where the second DCI is used to activate the multicast based semi-persistent scheduling SPS transmission.

In an optional implementation, the communication unit 803 is further configured to send third DCI scrambled by a group-radio network temporary identifier G-RNTI, where the third DCI is used to activate the multicast based semi-persistent scheduling SPS transmission, a value of first indication information included in the third DCI is a first value, the value of the first indication information includes the first value or a second value, the first value indicates the multicast based semi-persistent scheduling SPS transmission, and the second value indicates a multicast based dynamic scheduling transmission.

In an optional implementation, the third DCI does not include information indicating that the third DCI is used to schedule an uplink transmission or a downlink transmission.

In an optional implementation, a new data indicator NDI value in the first DCI is 1, a new data indicator NDI value in the second DCI is 0, and a new data indicator NDI value in the third DCI is 0.

In an optional implementation, the communication unit 803 is further configured to: send fourth DCI scrambled by a group-radio network temporary identifier G-RNTI, where the fourth DCI is used to deactivate the multicast based semi-persistent scheduling SPS transmission; or send fourth DCI scrambled by a group-configured scheduling-radio network temporary identifier G-CS-RNTI, where the fourth DCI is used to deactivate the multicast based semi-persistent scheduling SPS transmission.

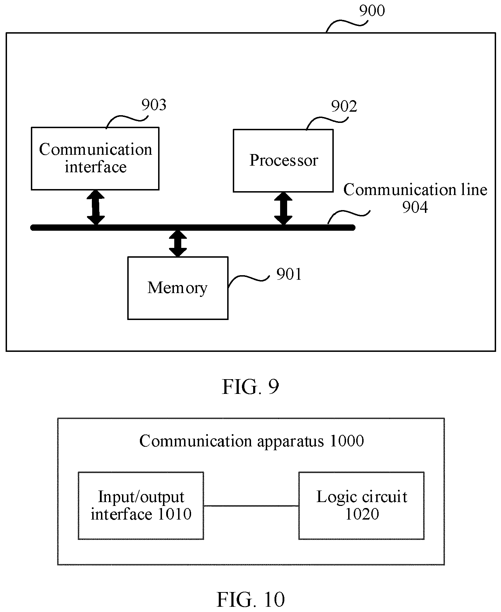

FIG. 9 is a schematic diagram of a communication apparatus according to this application. The apparatus may be the terminal device or the network device in the foregoing embodiments. The apparatus 900 includes a processor 902, a communication interface 903, and a memory 901. Optionally, the apparatus 900 may further include a communication line 904. The communication interface 903, the processor 902, and the memory 901 may be connected to each other by using the communication line 904. The communication line 904 may be a peripheral component interconnect (peripheral component interconnect, PCI) bus, an extended industry standard architecture (extended industry standard architecture, EISA) bus, or the like. The communication line 904 may be classified into an address bus, a data bus, a control bus, and the like. For ease of representation, only one thick line is used to represent the bus in FIG. 9, but this does not mean that there is only one bus or only one type of bus.

The processor 902 may be a CPU, a microprocessor, an ASIC, or one or more integrated circuits configured to control program execution in the solutions of this application.

The communication interface 903 is any apparatus such as a transceiver that is configured to communicate with another device or a communication network, such as an Ethernet, a radio access network (radio access network, RAN), a wireless local area network (wireless local area network, WLAN), or a wired access network.

The memory 901 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 901 is not limited thereto. The memory may exist independently, and is connected to the processor by using the communication line 904. The memory may alternatively be integrated with the processor.

The memory 901 is configured to store computer-executable instructions for executing the solutions in this application, and the processor 902 controls the execution. The processor 902 is configured to execute the computer-executable instructions stored in the memory 901, to implement the data transmission method provided in the foregoing embodiments of this application.

Optionally, the computer-executable instructions in embodiments of this application may also be referred to as application program code. This is not specifically limited in embodiments of this application.

Refer to FIG. 10. An embodiment of this application further provides another communication apparatus 1000. The communication apparatus is a chip system, and includes an input/output interface 1010 and a logic circuit 1020.

When the communication apparatus 1000 is a chip system in a terminal device, in some embodiments of this application, the logic circuit 1020 and the input/output interface 1010 may be configured to perform a function, an operation, or the like performed by the terminal device. For example, the input/output interface 1010 is configured to input first multicast data using a multicast based semi-persistent scheduling SPS transmission. The input/output interface 1010 is further configured to input first downlink control information DCI, where the first DCI is scrambled by a configured scheduling radio network temporary identifier CS-RNTI. The logic circuit 1020 is configured to obtain, through the input/output interface 1010, first data based on the first DCI, where the first data is retransmitted data of the first multicast data. Optionally, before the first DCI is inputted through the input/output interface 1010, the logic circuit 1020 is further configured to: determine that the receiving of the first multicast data fails, and output feedback information such as a NACK, where the feedback information indicates that the receiving of the first multicast data fails.

When the communication apparatus 1000 is a chip system in a network device, in some embodiments of this application, the logic circuit 1020 and the input/output interface 1010 may be configured to perform a function, an operation, or the like performed by the network device. The logic circuit 1020 is configured to generate first multicast data. The input/output interface 1010 is configured to output the first multicast data, where the first multicast data uses a multicast based semi-persistent scheduling SPS transmission. The input/output interface 1010 is further configured to output first downlink control information DCI, where the first DCI is scrambled by a configured scheduling radio network temporary identifier CS-RNTI, the first DCI is used to schedule first data, and the first data is retransmitted data of the first multicast data.

The communication apparatus 1000 provided in this embodiment may be used in a terminal device to perform a method performed by the foregoing terminal device, or may be used in a network device to perform a method performed by the foregoing network device. Therefore, for technical effects that can be achieved by the computer-readable storage medium, refer to the foregoing method embodiments. Details are not described herein again.

Based on the foregoing embodiments, an embodiment of this application further provides a communication system. The communication system includes at least one communication apparatus used in a network device and at least one communication apparatus used in a terminal device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, a method performed by the network device in any one of the foregoing embodiments is implemented, or a method performed by the data transmission apparatus in any one of the foregoing embodiments is implemented, or a method performed by the terminal device in any one of the foregoing embodiments is implemented. The computer-readable storage medium may include any medium that can store program code, such as a USB flash drive, a removable hard disk, a read-only memory, a random access memory, a magnetic disk, or an optical disc.

To implement the functions of the communication apparatus in FIG. 9 and FIG. 10, an embodiment of this application further provides a chip, including a processor and configured to support the communication apparatus in implementing the functions of the network device or the terminal device in the foregoing method embodiments. In a possible design, the chip is connected to a memory or the chip includes the memory, and the memory is configured to store a computer program or instructions and data that are necessary for the communication apparatus.

This application is described with reference to the flowcharts and/or block diagrams of the method, the device (system), and the computer program product according to embodiments of this application. It can be understood that the computer program or instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

A person skilled in the art should understand that embodiments of this application may be provided as a method, a system, or a computer program product. All or some of the foregoing embodiments may be implemented by using software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor may read information from the storage medium and write information to the storage medium. Optionally, the storage medium may alternatively be integrated into a processor. The processor and the storage medium may be disposed in the ASIC.

These computer program instructions may alternatively be loaded onto a computer or another programmable data processing device, so that a series of operations and steps are performed on the computer or the another programmable device, thereby generating computerimplemented processing. Therefore, the instructions executed on the computer or the another programmable device provide steps for implementing a specific function in one or more procedures in the flowcharts and/or in one or more blocks in the block diagrams.

Although this application is described with reference to specific features and embodiments thereof, it is clear that various modifications and combinations may be made to them without departing from an idea and the scope of this application. Correspondingly, the specification and accompanying drawings are merely example descriptions of this application defined by the accompanying claims, and are considered as any of or all modifications, variations, combinations or equivalents that cover the scope of this application. It is clear that, a person skilled in the art can make various modifications and variations to this application without departing from the scope of this application. Therefore, this application is intended to cover these modifications and variations of this application if they fall within the scope of claims of this application and equivalent technologies thereof.

**Claims**

1. A data transmission method, comprising:

   receiving first multicast data using a multicast based semi-persistent scheduling SPS transmission;
   receiving first downlink control information DCI, wherein the first DCI is scrambled by a configured scheduling radio network temporary identifier CS-RNTI; and
   receiving first data based on the first DCI, wherein the first data is retransmitted data of the first multicast data.

2. The method according to claim 1, wherein the method further comprises:
   receiving second DCI scrambled by a group-configured scheduling-radio network temporary identifier G-CS-RNTI, wherein the second DCI is used to activate the multicast based semi-persistent scheduling SPS transmission.

3. The method according to claim 1, wherein the method further comprises:
   receiving third DCI scrambled by a group-radio network temporary identifier G-RNTI, wherein the third DCI is used to activate the multicast based semi-persistent scheduling SPS transmission, a value of first indication information comprised in the third DCI is a first value, the value of the first indication information comprises the first value or a second value, the first value indicates the multicast based semi-persistent scheduling SPS transmission, and the second value indicates a multicast based dynamic scheduling transmission.

4. The method according to claim 3, wherein
   the third DCI does not comprise information indicating that the third DCI is used to schedule an uplink transmission or a downlink transmission.

5. The method according to claim 2, wherein a new data indicator NDI value in the first DCI is 1, and a new data indicator NDI value in the second DCI is 0.

6. The method according to claim 3 or 4, wherein a new data indicator NDI value in the first DCI is 1, and a new data indicator NDI value in the third DCI is 0.

7. The method according to any one of claims 1 to 6, wherein the method further comprises:

    receiving fourth DCI scrambled by a group-radio network temporary identifier G-RNTI, wherein the fourth DCI is used to deactivate the multicast based semi-persistent scheduling SPS transmission; or
    receiving fourth DCI scrambled by a group-configured scheduling-radio network temporary identifier G-CS-RNTI, wherein the fourth DCI is used to deactivate the multicast based semi-persistent scheduling SPS transmission.

8. A data transmission method, comprising:

    sending first multicast data using a multicast based semi-persistent scheduling SPS transmission; and
    sending first downlink control information DCI, wherein the first DCI is scrambled by a configured scheduling radio network temporary identifier CS-RNTI, the first DCI is used to schedule first data, and the first data is retransmitted data of the first multicast data.

9. The method according to claim 8, wherein the method further comprises:
   sending second DCI scrambled by a group-configured scheduling-radio network temporary identifier G-CS-RNTI, wherein the second DCI is used to activate the multicast based semi-persistent scheduling SPS transmission.

10. The method according to claim 8, wherein the method further comprises:
    sending third DCI scrambled by a group-radio network temporary identifier G-RNTI, wherein the third DCI is used to activate the multicast based semi-persistent scheduling SPS transmission, a value of first indication information comprised in the third DCI is a first value, the value of the first indication information comprises the first value or a second value, the first value indicates the multicast based semi-persistent scheduling SPS transmission, and the second value indicates a multicast based dynamic scheduling transmission.

11. The method according to claim 10, wherein
    the third DCI does not comprise information indicating that the third DCI is used to schedule an uplink transmission or a downlink transmission.

12. The method according to claim 9, wherein a new data indicator NDI value in the first DCI is 1, and a new data indicator NDI value in the second DCI is 0.

13. The method according to claim 10 or 11, wherein a new data indicator NDI value in the first DCI is 1, and a new data indicator NDI value in the third DCI is 0.

14. The method according to any one of claims 8 to 13, wherein the method further comprises:

    sending fourth DCI scrambled by a group-radio network temporary identifier G-RNTI, wherein the fourth DCI is used to deactivate the multicast based semi-persistent scheduling SPS transmission; or
    sending fourth DCI scrambled by a group-configured scheduling-radio network temporary identifier G-CS-RNTI, wherein the fourth DCI is used to deactivate the multicast based semi-persistent scheduling SPS transmission.

15. A data transmission apparatus, comprising:

    a communication unit, configured to receive first multicast data using a multicast based semi-persistent scheduling SPS transmission, wherein
    the communication unit is further configured to receive first downlink control information DCI, wherein the first DCI is scrambled by a configured scheduling radio network temporary identifier CS-RNTI; and
    a processing unit, configured to receive, through the communication unit, first data based on the first DCI, wherein the first data is retransmitted data of the first multicast data.

**16.** The apparatus according to claim 15, wherein the communication unit is further configured to:
receive second DCI scrambled by a group-configured scheduling-radio network temporary identifier G-CS-RNTI, wherein the second DCI is used to activate the multicast based semi-persistent scheduling SPS transmission.

**17.** The apparatus according to claim 15, wherein the communication unit is further configured to:
receive third DCI scrambled by a group-radio network temporary identifier G-RNTI, wherein the third DCI is used to activate the multicast based semi-persistent scheduling SPS transmission, a value of first indication information comprised in the third DCI is a first value, the value of the first indication information comprises the first value or a second value, the first value indicates the multicast based semi-persistent scheduling SPS transmission, and the second value indicates a multicast based dynamic scheduling transmission.

**18.** The apparatus according to claim 17, wherein the third DCI does not comprise information indicating that the third DCI is used to schedule an uplink transmission or a downlink transmission.

**19.** The apparatus according to claim 16, wherein a new data indicator NDI value in the first DCI is 1, and a new data indicator NDI value in the second DCI is 0.

**20.** The apparatus according to claim 17 or 18, wherein a new data indicator NDI value in the first DCI is 1, and a new data indicator NDI value in the third DCI is 0.

**21.** The apparatus according to any one of claims 15 to 20, wherein the communication module is further configured to:

receive fourth DCI scrambled by a group-radio network temporary identifier G-RNTI, wherein the fourth DCI is used to deactivate the multicast based semi-persistent scheduling SPS transmission; or
receive fourth DCI scrambled by a group-configured scheduling-radio network temporary identifier G-CS-RNTI, wherein the fourth DCI is used to deactivate the multicast based semi-persistent scheduling SPS transmission.

**22.** A data transmission apparatus, comprising:

a processing unit, configured to generate first multicast data using a multicast based semi-persistent scheduling SPS transmission; and
a communication unit, configured to send the first multicast data, wherein
the communication unit is further configured to send first downlink control information DCI, wherein the first DCI is scrambled by a configured scheduling radio network temporary identifier CS-RNTI, the first DCI is used to schedule first data, and the first data is retransmitted data of the first multicast data.

**23.** The apparatus according to claim 22, wherein the communication unit is further configured to:
send second DCI scrambled by a group-configured scheduling-radio network temporary identifier G-CS-RNTI, wherein the second DCI is used to activate the multicast based semi-persistent scheduling SPS transmission.

**24.** The apparatus according to claim 22, wherein the communication unit is further configured to:
send third DCI scrambled by a group-radio network temporary identifier G-RNTI, wherein the third DCI is used to activate the multicast based semi-persistent scheduling SPS transmission, a value of first indication information comprised in the third DCI is a first value, the value of the first indication information comprises the first value or a second value, the first value indicates the multicast based semi-persistent scheduling SPS transmission, and the second value indicates a multicast based dynamic scheduling transmission.

**25.** The apparatus according to claim 24, wherein the third DCI does not comprise information indicating that the third DCI is used to schedule an uplink transmission or a downlink transmission.

**26.** The apparatus according to claim 23, wherein a new data indicator NDI value in the first DCI is 1, and a new data indicator NDI value in the second DCI is 0.

**27.** The apparatus according to claim 24 or 25, wherein a new data indicator NDI value in the first DCI is 1, and a new data indicator NDI value in the third DCI is 0.

**28.** The apparatus according to any one of claims 22 to 27, wherein the communication unit is further configured to:

send fourth DCI scrambled by a group-radio network temporary identifier G-RNTI, wherein the fourth DCI is used to deactivate the multicast based semi-persistent scheduling SPS transmission; or

send fourth DCI scrambled by a group-configured scheduling-radio network temporary identifier G-CS-RNTI, wherein the fourth DCI is used to deactivate the multicast based semi-persistent scheduling SPS transmission.

29. A communication apparatus, comprising:
a processor, wherein the processor is coupled to a memory, the memory is configured to store a computer program or instructions, and the processor is configured to execute the computer program or the instructions, to implement the method according to any one of claims 1 to 7 or the method according to any one of claims 8 to 14.

30. A computer-readable storage medium, wherein the computer-readable storage medium stores a computer program or instructions, and when the instructions are run on a computer, the method according to any one of claims 1 to 7 or the method according to any one of claims 8 to 14 is implemented.

31. A computer program product, comprising computer instructions, wherein when the computer instructions are run on a computer, the computer is enabled to implement the method according to any one of claims 1 to 7 or the method according to any one of claims 8 to 14.

FIG. 1

FIG. 2

NACK

| Group SPS PDSCH | PUCCH | DCI scrambled by a CS-RNTI | Group SPS retransmission PDSCH | Group SPS PDSCH |

Time unit 1      Time unit 2      Time unit 3

Reception failure      Retransmission soft combination

HARQ process: N

FIG. 3

| Deactivation DCI scrambled by a G-CS-RNTI | Group SPS PDSCH ✗ | Group SPS PDSCH ✗ | Group SPS PDSCH ✗ | Group SPS PDSCH ✗ | Group SPS PDSCH ✗ |

Time unit 1    Time unit 2    Time unit 3    Time unit 4    Time unit 5    Time unit 6

FIG. 4

Target bit of DCI-1: 0
Target bit of DCI-2: 1

| DCI-1 scrambled by a G-RNTI | DCI-2 scrambled by a G-RNTI | DYN PDSCH | Group SPS PDSCH | Group SPS PDSCH | Group SPS PDSCH | Group SPS PDSCH |

Time unit 1      Time unit 2      Time unit 3    Time unit 4    Time unit 5

FIG. 5

| DCI scrambled by a G-RNTI | Group SPS PDSCH ✗ | Group SPS PDSCH ✗ | Group SPS PDSCH ✗ | Group SPS PDSCH ✗ |
| --- | --- | --- | --- | --- |
| Time unit 1 | Time unit 2 | Time unit 3 | Time unit 4 | Time unit 5 |

FIG. 6

FIG. 7

FIG. 8

900

Communication
interface
903

Processor
902

Communication line
904

Memory
901

FIG. 9

Communication apparatus 1000

Input/output
interface 1010

Logic circuit
1020

FIG. 10

## INTERNATIONAL SEARCH REPORT

| | International application No. |
|---|---|
| | **PCT/CN2022/084587** |

**A. CLASSIFICATION OF SUBJECT MATTER**

H04W 72/12(2009.01)i

According to International Patent Classification (IPC) or to both national classification and IPC

**B. FIELDS SEARCHED**

Minimum documentation searched (classification system followed by classification symbols)

H04W72/-;H04W4/-;H04L1/-;H04B1/-;H04B17/-;H04W52/-

Documentation searched other than minimum documentation to the extent that such documents are included in the fields searched

Electronic data base consulted during the international search (name of data base and, where practicable, search terms used)

CNTXT; CNABS; CNKI; 万方, WANFANG; 百度学术, BAIDU SCHOLAR; WPABSC; WPABS: 加掩, 加扰, 调度, 半持续, 半持久, 半静态, 物理下行共享, 下行物理共享, 多播, 组播, 重传, 重发, 重新传输, 重新发送; VEN; USTXT; EPTXT; WOTXT; 3GPP; IEEE: PDSCH, scrambled, pdcch, multi+, cast, group, retransmission, RNTI, SPS, repeat, HARQ, semi+, persist, mask, nack, DCI, CS.

**C. DOCUMENTS CONSIDERED TO BE RELEVANT**

| Category* | Citation of document, with indication, where appropriate, of the relevant passages | Relevant to claim No. |
|---|---|---|
| X | US 2020396684 A1 (SAMSUNG ELECTRONICS CO., LTD.) 17 December 2020 (2020-12-17) description, paragraphs [0189]-[0229], and figures 12-17 | 1-31 |
| Y | CN 102264039 A (CHINA ACADEMY OF TELECOMMUNICATIONS TECHNOLOGY) 30 November 2011 (2011-11-30) description, paragraphs [0061]-[0163] | 1-31 |
| Y | CN 111684744 A (OFINNO TECHNOLOGIES, LLC.) 18 September 2020 (2020-09-18) description, paragraphs [0327]-[0331] | 1-31 |
| Y | CN 110622451 A (INTEL IP CORP.) 27 December 2019 (2019-12-27) description, paragraphs 91-101 | 1-31 |
| A | CN 112398579 A (MEDIATEK INC.) 23 February 2021 (2021-02-23) entire document | 1-31 |
| A | CN 106560011 A (HUAWEI TECHNOLOGIES CO., LTD.) 05 April 2017 (2017-04-05) entire document | 1-31 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 May 2022** | **24 June 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/084587** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108633070 A (BEIJING SAMSUNG TELECOM R&D CENTER CO., LTD.; SAMSUNG ELECTRONICS CO., LTD.) 09 October 2018 (2018-10-09) entire document | 1-31 |
| A | US 2021099980 A1 (QUALCOMM INCORPORATED) 01 April 2021 (2021-04-01) entire document | 1-31 |

Form PCT/ISA/210 (second sheet) (January 2015)

INTERNATIONAL SEARCH REPORT
Information on patent family members

International application No.

**PCT/CN2022/084587**

| Patent document cited in search report | | | Publication date (day/month/year) | Patent family member(s) | | | Publication date (day/month/year) |
|---|---|---|---|---|---|---|---|
| US | 2020396684 | A1 | 17 December 2020 | EP | 3751891 | A1 | 16 December 2020 |
| | | | | KR | 20200143677 | A | 24 December 2020 |
| | | | | CN | 113170348 | A | 23 July 2021 |
| | | | | WO | 2020251211 | A1 | 17 December 2020 |
| CN | 102264039 | A | 30 November 2011 | WO | 2012146123 | A1 | 01 November 2012 |
| | | | | EP | 2704458 | A1 | 05 March 2014 |
| | | | | KR | 20140012162 | A | 29 January 2014 |
| | | | | US | 2014086137 | A1 | 27 March 2014 |
| CN | 111684744 | A | 18 September 2020 | US | 2019208436 | A1 | 04 July 2019 |
| | | | | GB | 202011960 | D0 | 16 September 2020 |
| | | | | JP | 2022028744 | A | 16 February 2022 |
| | | | | DE | 112019000346 | T5 | 08 October 2020 |
| | | | | JP | 2021507619 | A | 22 February 2021 |
| | | | | US | 2020213034 | A1 | 02 July 2020 |
| | | | | US | 2019207667 | A1 | 04 July 2019 |
| | | | | WO | 2019136205 | A1 | 11 July 2019 |
| | | | | EP | 3596863 | A1 | 22 January 2020 |
| | | | | US | 2020153542 | A1 | 14 May 2020 |
| | | | | US | 2019207705 | A1 | 04 July 2019 |
| | | | | KR | 20200104397 | A | 03 September 2020 |
| CN | 110622451 | A | 27 December 2019 | WO | 2018204730 | A1 | 08 November 2018 |
| | | | | EP | 3619860 | A1 | 11 March 2020 |
| | | | | US | 2020077470 | A1 | 05 March 2020 |
| CN | 112398579 | A | 23 February 2021 | None | | | |
| CN | 106560011 | A | 05 April 2017 | EP | 3319256 | A1 | 09 May 2018 |
| | | | | US | 2018152274 | A1 | 31 May 2018 |
| | | | | WO | 2017015836 | A1 | 02 February 2017 |
| CN | 108633070 | A | 09 October 2018 | KR | 20190124334 | A | 04 November 2019 |
| | | | | EP | 3603268 | A1 | 05 February 2020 |
| US | 2021099980 | A1 | 01 April 2021 | TW | 202131731 | A | 16 August 2021 |
| | | | | WO | 2021067073 | A1 | 08 April 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110364242